# FASCICULE DE BREVET EUROPEEN

(11) **EP 1 038 577 B1**
(45) Date de publication et mention de la délivrance du brevet: **28.12.2005**
(21) Numéro de dépôt: 00400637.5
(22) Date de dépôt: 08.03.2000
(51) Int. Cl.: B01J 21/06, B01J 23/85, C10G 45/04, B01J 37/08

(54) **Procédé d'hydrodésulfuration mettant en oeuvre un catalyseur supporté sur oxydes métalliques comprenant deux éléments du groupe IVB**
Hydrodesulphurationsverfahren mit einem Katalysator enthaltend Metalloxiden von zwei Elementen der Gruppe IVB
Process of hydrodesulfuration using a catalyst supported on metal oxides comprising two group IVB elements

(30) Priorité: 26.03.1999 FR 9903923
(43) Date de publication de la demande: 27.09.2000
(73) Titulaire: Institut Français du Pétrole, 92852 Rueil-Malmaison Cedex (FR)
(72) Inventeur: Koulikova, Eléna, 69150 Decines (FR); Deloume, Jean-Pierre, 69900 Villeurbanne (FR); Durand, Bernard, 92500 Rueil-Malmaison (FR); Vrinat, Michel, 69300 Caluire (FR); Kasztelan, Slavik, 92500 Rueil-Malmaison (FR)

(56) Documents cités:
- EP-A- 0 370 523
- WO-A-91/16265
- DATABASE WPI Section Ch, Week 199336 Derwent Publications Ltd., London, GB; Class H04, AN 1993-284799 XP002123030 & JP 05 200285 A (NIPPON MINING CO), 10 août 1993 (1993-08-10)

## Description

La présente invention concerne un procédé d'hydrodésulfuration de charges hydrocarbonées, mettant en oeuvre un catalyseur comprenant une matrice oxyde métallique amorphe ou mal cristallisée, ladite matrice comprenant du titane et au moins un autre cation du groupe IVB (groupe 4 selon la nouvelle notation de la classification périodique des éléments, Handbook of Chemistry and Physics, 76 ième édition, 1995-1996, intérieur 1 ère page de couverture) tel que le zirconium et le hafnium et éventuellement au moins un élément choisi parmi l'yttrium, le magnésium, le calcium, l'aluminium et le silicium. Le catalyseur contient en outre au moins du cobalt et du molybdène.

L'hydrotraitement des charges hydrocarbonées telles que les coupes pétrolières soufrées prend une importance de plus en plus grande dans la pratique du raffinage avec la nécessité croissante de réduire la quantité de soufre dans les coupes pétrolières et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux. Cette valorisation implique une réduction relativement importante du poids moléculaire des constituants lourds, qui peut être obtenue par exemple au moyen de réactions de craquage et d'hydrocraquage de charges préalablement raffinées, c'est-à-dire désulfurées et désazotées.

Les procédés actuels d'hydroraffinage catalytique utilisent des catalyseurs capables de promouvoir les principales réactions utiles à la mise en valeur des coupes lourdes, en particulier l'hydrogénation des noyaux aromatiques (HAR), l'hydrodésulfuration (HDS), l'hydrodésazotation (HDN) et autres hydroéliminations. L'hydroraffinage est employé pour traiter des charges telles que les essences, les kérosènes, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. Au moins une étape d'hydroraffinage est habituellement intégrée dans chacun des schémas connus de valorisation des coupes pétrolières lourdes.

L'influence de cet hydrotraitement préalable sur le rendement global et la durée de vie du catalyseur de craquage et/ou d'hydrocraquage est d'autant plus importante que l'on dispose de catalyseurs d'hydrotraitement plus actifs en hydrodésazotation, en hydrodésulfuration et en hydrogénation. L'hydrocraquage est employé pour traiter des charges telles que les gazoles sous vide, les résidus atmosphériques ou sous vide, désasphaltés ou non. L'hydrocraquage permet d'obtenir des coupes plus légères fortement purifiées c'est-à-dire à faible teneur en soufre, azote et métaux.

Les catalyseurs utilisés en hydroraffinage associent une matrice oxyde métallique, en général à base d'alumine, de grande surface (100 à 400 m².g⁻¹ généralement) présentant une acidité superficielle faible et une fonction hydrogénante apportée par au moins un métal du groupe VIB de la classification périodique tel que chrome, molybdène ou tungstène et au moins un métal du groupe VIII tel que fer, cobalt, nickel, ruthénium, rhodium, palladium, osmium, iridium ou platine. Lesdits catalyseurs peuvent également éventuellement contenir du phosphore.

Dans ces utilisations, il est important de disposer d'une matrice de type oxyde métallique à surface spécifique et à porosité élevées et dont les caractéristiques se maintiennent lors de la préparation et de l'utilisation du catalyseur. En effet la durée de vie des catalyseurs dépend en partie de leur capacité à conserver une surface spécifique et une porosité élevées, dans les conditions de la réaction, et la durée de vie des catalyseurs est un facteur déterminant de l'économie des procédés catalytiques tels que les procédés de charges hydrocarbonées.

Le contexte de la présente invention, résumé ci-dessus, est bien connu de l'Homme du métier. On trouvera par exemple une analyse détaillée de ce contexte dans Oil & Gas Journal, le 16 février 1987, pages 55 à 66, Van Kessel et al.

Les oxydes métalliques contenant du titane sont utilisés par exemple comme constituants de céramiques, pigments, adsorbants, catalyseurs pour pots d'échappement pour automobiles, et plus généralement comme constituants de catalyseurs ou supports de catalyseurs.

Dans ces utilisations et en particulier dans les utilisations comme catalyseur, catalyseur pour pot d'échappement automobile ou support de catalyseur, il est important de disposer d'oxydes métalliques à base de titane à surface spécifique et à porosité élevées et qui conservent leur surface spécifique et leur porosité lors de chauffage prolongé à température élevée sous une atmosphère réductrice ou oxydante. En effet la durée de vie des catalyseurs dépend en partie de leur résistance au chauffage, et la durée de vie des catalyseurs est un facteur déterminant de l'économie des procédés catalytiques ou équipements catalytiques qui les utilisent.

Nous avons trouvé, que de façon surprenante une matrice oxyde à base de titane contenant au moins un autre élément du groupe IVB tel que le zirconium et le hafnium, de préférence le zirconium, présente une surface spécifique et/ou une porosité élevées et permet d'obtenir de bons catalyseurs d'hydroraffinage de charges hydrocarbonées. Ces matrices oxydes métalliques contenant du titane ayant une surface spécifique et une porosité élevées peuvent être avantageusement obtenues selon un procédé de préparation en milieu sels fondus. Les températures utilisées dans ce procédé sont beaucoup plus basses que les températures de calcination habituelles, ce qui rend le procédé plus économique. Les oxydes à base de titane obtenus ont une surface spécifique et une porosité élevées et sont stables à température élevée. Ils permettent également d'obtenir une excellente dispersion des phases catalytiquement actives.

La matrice de type oxyde métallique contenant du titane obtenue selon l'invention comprend :
- de 40 à 95% en masse d'oxyde de titane, voire jusqu'à 100% d'oxyde de titane
- de 0,1 à 60 % en masse d'un oxyde du groupe IVB, zirconium et/ou hafnium et éventuellement :

- de 0 à 40 % en masse d'oxyde d'au moins un élément choisi parmi l'yttrium, le magnésium, le calcium, l'aluminium, le silicium.

La matrice, c'est à dire ici les oxydes métalliques contenant du titane à surface spécifique et à porosité élevées obtenus selon l'invention se caractérisent en ce qu'ils ont une surface spécifique mesurée selon la méthode BET supérieure à 80 m²/g , un volume poreux supérieur à 0,3 cm³/g, et souvent un diamètre moyen des pores supéneur à 5 nm.

Dans le cas d'oxyde mixte de titane contenant un autre élément du groupe IVB on détecte la formation d'une phase de type titanate de zirconium ou de hafnium à partir du diagramme de diffraction de rayons X. L'identification des phases est réalisée en utilisant la méthode classique de diffraction de rayons X par les poudres. La recherche, manuelle ou informatisée, de la coïncidence entre les distances interréticulaires expérimentales et celles consignées dans le répertoire ICDD aboutit à la reconnaissance des phases formées. Ainsi par exemple, sont données par les fiches ICDD : TiO₂ anatase (21-1272), TiO₂ rutile (21-1276), ZrO₂ monoclinique (37-1484), ZrO₂ quadratique (17-0923), ZrTiO₄ (34-0415), HfTiO₄ (40-0794).

Le catalyseur supporté selon la présente invention renferme généralement en % masse par rapport à la masse totale du catalyseur :
- 1 à 99,9%, de préférence 5 à 99,5% et de manière encore plus préférée 10 à 99% d'au moins une matrice de type oxydes métalliques contenant du titane,
- 0,1 à 99%, de préférence 0,5 à 95% et de manière encore plus préférée 1 à 90% d'au moins un élément du groupe VIB et/ou du groupe VIII.

Et éventuellement de :
- 0 à 20%, de préférence 0 à 15% et de manière encore plus préférée 0 à 10% de phosphore.

De nombreux procédés connus de l'Homme de métier ont été proposés pour l'obtention de supports catalytiques très poreux, dont la porosité résiste aux traitements thermiques prolongés.

Selon la demande de brevet Français 9005049, un oxyde d'aluminium et un mélange d'oxydes d'aluminium et de titane stable sont obtenus par précipitation ou co-précipitation dans un milieu sels fondus d'un mélange renfermant un composé d'aluminium et un composé de titane, suivi d'un lavage, d'un séchage et d'une calcination. Ce procédé permet la synthèse d'oxydes métalliques mixtes à base d'aluminium.

La matrice et le catalyseur utilisés dans la présente invention peuvent être obtenus par toute méthode connue de l'Homme de métier. On utilise avantageusement un procédé de synthèse de la matrice oxyde métallique comprenant les étapes suivantes :
a) on réalise un mélange d'un sel quelconque de titane et éventuellement d'un sel quelconque de métal du groupe IVB et d'un milieu sels fondus constitué d'au moins un oxo-sel à caractère plus ou moins basique, et éventuellement au moins une base,
b) on maintient éventuellement ce mélange à une température basse en général inférieure à 200°C, le temps nécessaire pour déshydrater partiellement ou totalement le ou les précurseurs de la réaction,
c) on maintient ce mélange à la température de la réaction, le temps nécessaire pour transformer le ou les sels en oxydes,
d) on isole l'oxyde, le mélange des oxydes et/ou la solution solide des oxydes métalliques formés.

On récupère ainsi une poudre qui peut être séchée et/ou calcinée selon les besoins et mise en forme selon toutes les techniques bien connues de l'Homme de métier.

Cette méthode permet d'obtenir un volume poreux et un diamètre de pores plus grand avec une bonne stabilité en température.

Le sel métallique à transformer en oxyde est un sel quelconque du métal considéré. Il s'agit en général d'un nitrate, d'un sulfate ou d'un halogénure comme le chlorure ou le bromure ou d'un oxyhalogénure comme l'oxychlorure. Dans le cas du titane on utilise de préférence l'oxysulfate de titane TiOSO₄.xH₂O.

Le milieu sels fondus est composé d'au moins un oxo-sel alcalin à caractère plus ou moins basique. L'utilisation de ces sels alcalins hydrosolubles facilite la récupération des oxydes formés.

Parmi les oxo-sels à caractère plus ou moins basique, on utilise de préférence les nitrates alcalins parce qu'ils permettent de travailler à des températures basses, nécessaires pour l'obtention d'oxydes à surface spécifique et à porosité élevées.

Il est avantageux d'utiliser les mélanges de plus bas point de fusion (dits « mélanges eutectiques »), tel qu'un mélange KNO₃-NaNO₃ à 54% en masse de KNO₃ Ce mélange fond à 225°C et permet de sélectionner la température réactionnelle dans un domaine très large. On peut également utiliser le mélange eutectique KNO₃-LiNO₃ qui fond à 132°C.

La température influe sur la surface spécifique et la porosité de l'oxyde obtenu. Une augmentation de la température favorise la formation de larges pores, mais a un effet inverse sur la surface spécifique. L'optimum doit être déterminé en fonction de l'utilisation finale de l'oxyde.

En cas d'utilisation comme support de catalyseur, la taille des pores doit être compatible avec la taille des molécules à transformer. La température de la réaction varie donc en fonction des propriétés recherchées et également en fonction de la nature des réactifs.

En cas de l'utilisation de nitrates alcalins, la température de la réaction varie en général entre 150 et 550°C. Dans le cas de la synthèse de l'oxyde de titane, la température est en général comprise entre 300 et 550°C.

Nous décrivons plus en détail la mise en oeuvre du procédé de synthèse des oxydes métalliques contenant du titane.

Le ou les sels métalliques à transformer en oxydes sont introduits dans un réacteur. On ajoute à ce milieu le ou les oxo-sels à caractère plus ou moins basique. L'ensemble est amené dans un premier temps à la température de déshydratation des sels métalliques puis dans un second temps à la température de la réaction. On peut éventuellement déshydrater les sels métalliques avant mélange avec les constituants du bain de sel.

Pour la préparation de TiO₂ ou d'oxydes à base de TiO₂, les nitrates alcalins sont préférés aux nitrites alcalins dont la basicité plus élevée favorise la formation d'ions polytitanates. Les nitrates sont réduits en dioxyde d'azote au cours de la réaction.

Les sels alcalins sont employés en large excès par rapport au sel métallique à transformer en oxyde. On utilise en général au moins 2 fois la quantité de sel alcalin par rapport à la stoechiométrie de la réaction.

La réaction est complète en 0,5 h à 4 heures. Le milieu réactionnel est refroidi et les sels alcalins éliminés par lavage à l'eau. Les oxydes métalliques sont récupérés en général par filtration. On obtient une poudre qui est en général séchée à l'étuve à une température comprise entre 30 et 150°C. On peut éventuellement calciner ensuite la poudre à une température comprise entre 150 et 1000°C.

Les rendements en oxydes sont voisins de 100%.

Les mélanges d' oxydes de titane et de zirconium sont obtenus avantageusement à partir l'oxysulfate de titane TiOSO₄. xH₂O et d'un sel de zirconium tel que l'oxychlorure de zirconium. Les phases présentes dans le mélange oxyde de titane - oxyde de zirconium sont en général avantageusement modifiées par l'ajout au bain fondu d'un ion d'un métal bi ou trivalent, comme l'yttrium, le lanthane, le magnésium ou le calcium.
Les mélanges d'oxydes de titane et de hafnium sont obtenus avantageusement à partir de l'oxysulfate de titane TiOSO₄. xH₂O et d'un sel de hafnium tel que le tétrachlorure de hafnium. Les phases présentes dans le mélange oxyde de titane-oxyde de hafnium sont en général avantageusement modifiées par l'ajout au bain fondu d'un ion d'un métal bi ou trivalent, comme l'yttrium, le lanthane, le magnésium ou le calcium.

L'yttrium est en général utilisé sous forme de chlorure YCl₃ et l'aluminium, sous la forme de chlorure d'aluminium AlCl₃.

Les oxydes métalliques contenant du titane à surface spécifique et à porosité élevées, obtenus selon l'invention conviennent à toutes les utilisations habituelles des oxydes à base de titane et par exemple dans les céramiques, les adsorbants, les pigments, comme constituant de catalyseur et/ou support pour pots d'échappement catalytiques pour automobiles, comme catalyseurs et/ou supports de catalyseurs.

Les oxydes métalliques contenant du titane à surface spécifique et à porosité élevées, obtenus selon l'invention peuvent être mis en forme selon toutes les méthodes connues de l'Homme de métier. La mise en forme du catalyseur supporté selon l'invention peut être une extrusion, un pastillage, la méthode de la goutte d'huile (oil-drop), une granulation au plateau tournant ou toute autre méthode bien connue de l'Homme du métier.

Afin d'améliorer encore le volume poreux des oxydes métalliques contenant du titane à surface spécifique et à porosité élevées obtenus selon l'invention, on peut ajouter lors de l'opération de mise en forme un ou des porogènes de nature organique ou minérale comme il est bien connu de l'Homme de métier.

En cas d'utilisation comme support catalytique, la matrice oxyde métallique est préalablement mise en forme et calcinée avant imprégnation. La matrice préformée est alors éventuellement calcinée sous air, usuellement à une température d'au moins 300°C, couramment d'environ 350 à 1000°C. Les phases actives sont introduites en général par imprégnation par des précurseurs des phases actives.

L'imprégnation de la matrice est de préférence effectuée par la méthode d'imprégnation dite "à sec" bien connue de l'Homme du métier. L'imprégnation peut être effectuée en une seule étape par une solution contenant l'ensemble des éléments constitutifs du catalyseur final.
Le molybdène de même que le cobalt peuvent être introduits dans le catalyseur à divers niveaux de la préparation et de diverses manières.

Le molybdène et/ou le cobalt peuvent être introduits en partie seulement ou en totalité au moment du malaxage de la matrice poreuse.

Le cobalt peut être introduit par une ou plusieurs opérations d'échange jonique sur la matrice calcinée contenant de la phase sulfure du molybdène dispersée dans la matrice choisie, à l'aide d'une solution contenant au moins un sel précurseur du cobalt. Il peut être introduit par au moins une opération d'imprégnation du support mis en forme et calciné, par une solution de précurseur d'au moins un métal du cobalt, tout précurseur du cobalt étant de préférence introduit en même temps ou après tout précurseur du molybdène.

Dans le cas où le molybdène et/ou le cobalt sont introduits en plusieurs imprégnations des sels précurseurs correspondants, une étape de séchage intermédiaire du catalyseur est généralement effectuée à une température généralement comprise entre 60 et 250°C.

Les sources du molybdène qui peuvent être utilisées sont bien connues de l'Homme du métier. On utilise de préférence l'oxyde de molybdène, le molybdate d'ammonium ou l'heptamolybdate d'ammonium.

Utilisés comme supports de catalyseurs, ces oxydes permettent une répartition très homogène des phases actives, ce qui améliore leurs performances par rapport aux catalyseurs commerciaux. Les précurseurs des phases actives sont transformés en phases catalytiquement actives, en général par calcination et/ou réduction et/ou sulfuration.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'Homme du métier.

Les catalyseurs obtenus par la présente invention sont utilisés pour l'hydrodésulfuration de charges hydrocarbonées telles que les coupes pétrolières, les coupes issues du charbon ou les hydrocarbures produits à partir du gaz naturel et plus particulièrement pour l'hydrodésulfuration, de charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre. Dans ces utilisations, les catalyseurs obtenus par la présente invention présentent une activité améliorée par rapport à l'art antérieur.

Les charges employées dans le procédé sont généralement choisies dans le groupe formé par les essences, les kérosènes, les gazoles, les gazoles sous vide, les résidus désasphaltés ou non, les huiles paraffiniques, les cires et paraffines. Elles peuvent contenir des hétéroatomes tels que soufre, oxygène , azote et au moins un métal

Les résultats qui importent au raffineur sont l'activité en HDS, en HDN et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Les catalyseurs utilisés dans la présente invention peuvent être aussi avantageusement utilisés lors du prétraitement des charges de craquage catalytique et en première étape d'un hydrocraquage ou d'une hydroconversion douce.

Les conditions de l'hydroraffinage telles que température, pression, taux de recyclage d'hydrogène, vitesse volumique horaire, pourront être très variables en fonction de la nature de la charge, de la qualité des produits désirés et des installations dont dispose le raffineur. Elles sont bien connues de l'Homme du métier. La température est en général supérieure à 200°C et souvent comprise entre 250°C et 480°C. La pression est en général supérieure à 0,05 MPa et souvent supérieure à 1 MPa. La présence d'hydrogène est en général nécessaire avec un taux de recyclage d'hydrogène généralement d'au moins 50 et souvent compris entre 50 et 5000 litres d'hydrogène par litre de charge. La vitesse volumique horaire est comprise en général entre 0,1 et 20 volume de charge par volume de catalyseur et par heure.

Les catalyseurs dont le support est constitué par des oxydes métalliques préparés selon l'invention présentent une stabilité thermique et une activité catalytique améliorées par rapport aux catalyseurs commerciaux.

**On met élément IIA obligatoire**

Les exemples suivants illustrent l'invention sans toutefois la limiter.

### Exemple 1 : Préparation de zircone quadratique (comparatif)

On prépare une zircone quadratique en partant d'un oxychlorure de zirconium commercial ZrOCl₂, 8H₂O (MERCK) auquel est ajouté une petite quantité de nitrate de calcium, Ca(NO₃)₂, 6H₂O (PROLABO) telle que le rapport molaire CaO/(CaO + ZrO₂) soit de 0,03. On introduit un mélange KNO₃-NaNO₃ en large excès par rapport aux quantités stoechiométriques (environ un rapport de 2). Le milieu réactionnel est déshydraté par chauffage à 150°C pendant 30 minutes. Le mélange est chauffé à 485°C et cette température maintenue pendant 1 heure. Après refroidissement du bain et élimination des sels alcalins par lavage prolongé à l'eau, la zircone est récupérée par filtration. Le rendement est voisin de 100%. La zircone quadratique Zr100 obtenue se caractérise par une surface spécifique mesurée après calcination à 550°C selon la méthode BET de 157 m²/g et un volume poreux à l'azote de 0,32 cm³/g.

D'une manière très similaire on prépare une zircone stabilisée par l'yttrium. Un oxychlorure de zirconium commercial ZrOCl₂, 8H₂O (MERCK) est ajouté au chlorure d'yttrium, YCl₃, 6H₂O (PROLABO) en quantité telle que le rapport molaire Y₂O₃/( Y₂O₃ + ZrO₂) soit de 0,03. On introduit un mélange KNO₃-NaNO₃ en large excès par rapport aux quantités stoechiométriques (environ un rapport de 2). Le milieu réactionnel est déshydraté par chauffage à 150°C pendant 30 minutes. Le mélange est chauffé à 485°C et cette température maintenue pendant 1 heure. Après refroidissement du bain et élimination des sels alcalins par lavage prolongé à l'eau, la zircone est récupérée par filtration. Le rendement est voisin de 100%. La zircone quadratique Zr100-B obtenue se caractérise par une surface spécifique mesurée après calcination à 550°C selon la méthode BET de 140 m²/g et un volume poreux à l'azote de 0,3cm³/g.

### Exemple 2 : Préparation d'oxyde de titane (comparatif).

Un oxysulfate de titane, commercial, TiOSO₄.xH₂O (Riedel de Haën, 14023) est ajouté à un mélange KNO₃-NaNO₃, en quantité telle que les nitrates soient en large excès par rapport aux quantités stoechiométriques (environ un rapport de 2).

Le mélange est maintenu à 400°C pendant 1 heure. La récupération de l'oxyde formé, se déroule de la même façon que dans l'exemple 1. Le rendement est voisin de 100%.

L'oxyde de titane obtenu, de type anatase, se caractérise après calcination à 550°C par une surface spécifique mesurée selon la méthode BET de 100m²/g, et un volume poreux à l'azote de 0,30cm³/g.

### Exemple 3 : Préparation de support oxyde double de titane et de zirconium

Diverses compositions ZrO₂-TiO₂ avec différentes teneurs en zircone ont été préparées selon la méthode des sels fondus en utilisant les précurseurs commerciaux oxysulfate de titane, TiOSO₄.xF₂O (Riedel de Haën, 14023) et oxychlorure de zirconium, ZrOCl₂.8H₂O (Merck). On ajoute également du nitrate de calcium Ca(NO₃)₂, 6H₂O (PROLABO) en quantité telle que le rapport molaire CaO/(CaO + ZrO₂) soit de 0,03. On introduit un mélange KNO₃-NaNO₃ en large excès par rapport aux quantités stoechiométriques (environ un rapport de 2). La vitesse de chauffe est dans tous les cas de 190°C/heure. La température optimale pour obtenir la réaction complète est de 450°C. Après refroidissement du bain et élimination des sels alcalins par lavage prolongé à l'eau, le solide est récupéré par filtration et séché à l'étuve pendant 24 heures à 100°C puis calciné à 550°C pendant deux heures sous air sec. Les caractéristiques des oxydes obtenus sont indiquées dans le tableau 1. Le rendement est voisin de 100% pour toutes les préparations.

Les produits obtenus ont été caractérisés par la diffraction de rayons X. Les produits ayant une fraction molaire en zircone ZrO₂ inférieure à 50% montrent l'existence d'une phase TiO₂ anatase, a-TiO₂, (fiche ICDD n° 21-1272) et ZrTiO₄(fiche ICDD 34-0415). Les produits ayant une fraction molaire en zircone ZrO₂ supérieure à 50% montrent l'existence d'un mélange de phase ZrO₂ quadratique, q-ZrO₂, (fiche ICDD n° 17-0923), ZrO₂ monoclinique, m-ZrO₂, (fiche ICDD n° 37-1484) et ZrTiO4 (fiche ICDD 34-0415) .

Afin de déterminer l'influence de la présence du calcium, une composition ZrO₂-TiO₂ avec 20% mol de Zr et 80% mol de Ti a été préparé selon la méthode des sels fondus en utilisant les précurseurs commerciaux oxysulfate de titane, TiOSO₄.xH₂O (Riedel de Haën, 14023) et oxychlorure de zirconium, ZrOCl₂.8H₂O (Merck). On introduit un mélange KNO₃-NaNO₃ en large excès par rapport aux quantités stoechiométriques (environ un rapport de 2). La vitesse de chauffe est dans tous les cas de 190°C/heure. La température optimale pour obtenir la réaction complète est de 450°C. Après refroidissement du bain et élimination des sels alcalins par lavage prolongé à l'eau, le solide est récupéré par filtration et séché à l'étuve pendant 24 heures à 100°C puis calciné à 550°C pendant deux heures sous air sec. Les caractéristiques de l'oxyde Zr20Ti80-B obtenu sont indiquées dans le tableau 1. Le rendement est voisin de 100% pour cette préparation.

Le produit Zr20Ti80-B obtenu a été caractérisé par la diffraction de rayons X. Ce produit contient une phase TiO₂ anatase, a-TiO₂, (fiche ICDD n° 21-1272) et une phase ZrTiO₄(fiche ICDD 34-0415).

Les oxydes doubles de titane et de zirconium obtenus se caractérisent par des surfaces spécifiques mesurées selon la méthode BET élevées, supérieures à 100m²/g, et des volume poreux à l'azote importants, supérieurs à 0,3cm³/g comme le montre le tableau 1.

**Tableau 1**

| Echantillon | Fraction molaire ZrO₂ (%) | Surface spécifique BET (m²/g) | volume poreux azote (cm³/g) | DRX |
|---|---|---|---|---|
| Ti100 | 0 | 100 | 0,3 | a-TiO2 |
| Zr5Ti95 | 5 | 154 | 0,43 | a-TiO2 +ZrTiO4 |
| Zr10Ti90 | 10 | 147 | 0,49 | a-TiO2 +ZrTiO4 |
| Zr20Ti80 | 20 | 115 | 0,3 | a-TiO2 +ZrTiO4 |
| Zr20Ti80-B | 20 | 105 | 0,28 | a-TiO2 +ZrTiO4 |
| Zr66Ti33 | 66 | 240 | 0,43 | q+m-ZrO2+ZrTiO4 |
| Zr80Ti20 | 80 | 183 | 0,48 | q+m-ZrO2+ZrTiO4 |
| Zr90Ti10 | 90 | 171 | 0,52 | q+m-ZrO2+ZrTiO4 |
| Zr100 | 100 | 140 | 0,3 | q-ZrO2 |
| Zr100-B | 100 | 125 | 0,28 | q-ZrO2 |

### Exemple 4 : Préparation de catalyseurs CoMo et NiMo supporté sur les oxydes doubles de titane et de zirconium (conforme à l'invention).

Les catalyseurs sont obtenus par co-imprégnation sans excès de solution des solides préparés dans l'exemple 3 (tableau 1) ci dessus, avec des solutions d'heptamolybdate d'ammonium, de nitrate de nickel ou de nitrate de cobalt, en quantités telles que la teneur en Mo soit de 2,8 atomes/nm² et celle en cobalt ou en nickel soit de 1,5 atomes/nm² ce qui correspond à un rapport molaire Ni/(Ni+Mo) ou Co/(Co+Mo) de 0,35. Les produits résultants sont ensuite calcinés sous air à 500°C pendant 2 heures. Les catalyseurs obtenus et leur surface spécifiques sont reportées dans le tableau 2 pour les formules NiMo et dans le tableau 3 pour les formules CoMo.

**Tableau 2**

| Catalyseur | S BET support (m²/g) | Activité HDS l/g/sec | Activité HDS l/mole Mo/sec |
|---|---|---|---|
| NiMo/Ti100 | 100 | 0,47 | 0,94 |
| NiMo/Zr5Ti95 | 124 | 0,96 | 1,83 |
| NiMo/Zr10Ti90 | 147 | 1,12 | 1,86 |
| NiMo/Zr20Ti80 | 115 | 0,95 | 1,95 |
| NiMo/Zr66Ti33 | 250 | 0,88 | 0,95 |
| NiMo/Zr80Ti20 | 183 | 0,93 | 1,27 |
| NiMo/Zr90Ti10 | 171 | 0,93 | 1,34 |
| NiMo/Zr100 | 125 | 0,90 | 1,52 |

**Tableau 3**

| Catalyseur | S BET support (m²/g) | Activité HDS l/g/sec | Activité HDS l/mole Mo/sec |
|---|---|---|---|
| CoMo/Ti100 | 100 | 0,84 | 1,74 |
| CoMo/Zr5Ti95 | 124 | 1,07 | 2,09 |
| CoMo/Zr10Ti90 | 147 | 1,13 | 1,88 |
| CoMo/Zr20Ti80 | 115 | 1,39 | 2,84 |
| CoMo/Zr20Ti80-B | 105 | 1,24 | 2,83 |
| CoMo/Zr66Ti33 | 250 | 1,13 | 1,21 |
| CoMo/Zr80Ti20 | 183 | 1,00 | 1,38 |
| CoMo/Zr100 | 140 | 0,74 | 1,24 |
| CoMo/Zr100-B | 125 | 0,70 | 1,22 |

### Exemple 5 : Test en HDS du dibenzothiophène

Les catalyseurs supportés, précédemment décrits dans l'exemple 4, ont été comparés en test d'hydrodésulfuration du dibenzothiophène dans un réacteur à lit fixe traversé sous pression d'hydrogène dans les conditions opératoires suivantes :

| | |
|---|---|
| Pression totale | 3,3MPa |
| Pression de DBT | 485Pa |
| Débit d' hydrogène | 84 cm³/h |
| Masse de catalyseur | 20-50 mg |
| Pression d'H₂S | 25,3kPa |
| Température | 300°C |

Ils ont été préalablement sulfurés par un mélange hydrogène-hydrogène sulfuré (15% en volume) à 400°C pendant 2 heures.

Les performances catalytiques sont données dans les tableaux 2 et 3. Elles sont exprimées en activité spécifique, en mole de DBT convertie par gramme de catalyseur et par heure. Cependant, compte tenu du fait que les surfaces spécifiques des catalyseurs sont très variables d'un échantillon à l'autre, on a également reporté dans ces tableaux les valeurs de l'activité relative exprimée par mole de molybdène, ce qui permet de comparer l'activité intrinsèque de la phase active sur ces différents supports.

### Exemple 6 : Test en HDS de gazole des catalyseurs supportés

Les catalyseurs supportés précédemment décrits ont également été comparés en test d'hydrodésulfuration de gazole dont les principales caractéristiques sont données ci-dessous :

| | |
|---|---|
| Densité à 15°C | 0,856 |
| Indice de Réfraction à 20°C | 1,4564 |
| Viscosité à 50°C | 3,72 cSt |
| Soufre | 1,57%mass |
| | e |

Le test d'HDS de gazole est mené dans les conditions opératoires suivantes :

| | |
|---|---|
| Pression totale | 3 MPa |
| Température | 340°C |
| Débit d'hydrogène | 20 I/h |
| Débit de charge | 80 cm³/h |

Chacun des catalyseurs est sulfuré avant le test par un mélange gazole /DMDS jusqu'à 350°C. Les performances catalytiques des catalyseurs testés sont données dans le tableau 4 suivant dans lequel sont rapportées les conversions obtenues pour une même masse catalytique de 0,5g.

**Tableau 4**

| catalyseur | conversion HDS % catalyseur frais | conversion HDS % après régénération |
|---|---|---|
| CoMo/TiO₂ | 17 | 13 |
| CoMo/Zr20Ti80 | 27 | 24 |
| CoMo/Zr20Ti80-B | 25 | 12 |
| CoMo/ZrO₂ | 24 | 19 |
| CoMo/ZrO₂-B | 22 | 7 |

On observe dans le tableau 4 que les catalyseurs à base d'oxyde double de titane et de zirconium de l'invention sont plus actifs que les catalyseurs à base d'oxyde simple.

Après le test d'hydrodésulfuration de gazole, les catalyseurs usés sont récupérés et régénéré par une calcination sous air. Celle-ci est réalisée en trois paliers de température de 2 heures, 150°C, 350°C et 550°C. Pour 5 g de catalyseur on utilise un débit d'air de 21/h dans un réacteur à lit fixe traversé de bas en haut du flux d'air. A la suite de cette régénération le catalyseur est testé à nouveau en hydrodésulfuration de gazole selon le même protocole que ci-dessus. Les performances catalytiques des catalyseurs régénérés sont données dans le tableau 4 dans lequel sont rapportées les conversions obtenues pour une même masse catalytique de 0,5g.

On constate également dans le tableau 4 qu'il est avantageux d'introduire un élément du groupe IIA dans la formulation d'oxyde mixte associant du titane et du zirconium afin d'obtenir une bonne stabilité du catalyseur au traitement thermique de calcination et de régénération.

## Revendications

1. Procédé d'hydrodésulfuration d'hydrocarbures mettant en oeuvre un catalyseur à base d'une matrice amorphe ou mal cristallisée, ladite matrice renfermant du titane et au moins un métal choisi dans le groupe IVB (sous forme oxyde) choisi parmi le zirconium et l'hafnium et ledit catalyseur renfermant en outre au moins du cobalt et du molybdène.

2. Procédé selon la revendication 1 dans lequel le métal du groupe IVB est le zirconium.

3. Procédé selon la revendication 1 dans lequel ledit catalyseur renferme en outre au moins un élément choisi dans le groupe constitué par l'yttrium, le magnésium, le calcium l'aluminium et le silicium.

4. Procédé selon l'une des revendications 1 ou 2 dans lequel ladite matrice renferme :
- 40 à 95% en masse d'oxyde de titane
- 0,1 à 0,6% en masse dudit oxyde du groupe IVB.

5. Procédé selon la revendication 4 dans lequel ladite matrice renferme en outre 0 à 40% en masse d'oxyde d'au moins un élément choisi parmi l'yttrium, le magnésium, le calcium, l'aluminium et le silicium.

6. Procédé selon l'une des revendications 1 à 5 dans lequel ladite matrice, avec les autres oxydes qu'elle contient éventuellement, a une surface spécifique supérieure à 80 m2/get un volume poreux supérieur à 0,3 cm3/g.

7. Procédé selon l'une des revendications 1 à 6 dans lequel le catalyseur renferme, en poids par rapport à la masse totale du catalyseur :
- 1 à 99,9% de la matrice définie aux revendications 1 à 6,
- 0,1 à 99% d'au moins un élément choisi dans les groupes VIB et VIII.

8. Procédé selon l'une des revendications 1 à 7 dans lequel la température est comprise entre 250°C et 480°C, le pression est supérieure à 1 MPa, le taux de recyclage d'hydrogène est compris entre 50 et 5000 litres d'hydrogène par litre de charge, et la vitesse volumique horaire est comprise entre 0,1 et 20 volume de charge par volume de catalyseur et par heure..

## Patentansprüche

1. Verfahren zur Hydrierentschwefelung von Kohlenwasserstoffen, welches einen Katalysator auf Basis einer amorphen oder schlecht kristallisierten Matrix einsetzt, wobei die Matrix Titanoxid und wenigstens ein Metall umfasst, das gewählt ist aus der Gruppe IVB (in Oxidform), gewählt unter Zirkonium und Hafnium und der Katalysator außerdem wenigstens Kobalt und Molybdän einschließt.

2. Verfahren nach Anspruch 1, bei dem das Metall der Gruppe VIB Zirkonium ist.

3. Verfahren nach Anspruch 1, bei dem der Katalysator außerdem wenigstens ein Element einschließt, das gewählt ist aus der Gruppe, die besteht aus Yttrium, Magnesium, Kalzium, Aluminium und Silizium.

4. Verfahren nach einem der Ansprüche 1 oder 2, bei dem die Matrix einschließt:
- 40 bis 95 Masse-% Titanoxid,
- 0,1 bis 0,6 Masse-% des Oxids der Gruppe VIIB.

5. Verfahren nach Anspruch 4, bei dem die Matrix 0 bis 40 Masse-% an Oxid wenigstens eines Elements umfasst, das gewählt ist unter Yttrium, Magnesium, Kalzium, Aluminium und Silizium.

6. Verfahren nach einem der Ansprüche 1 bis 5, bei dem die Matrix mit den anderen Oxiden, die sie gegebenenfalls enthält, eine spezifische Oberfläche über 80 m²/g und ein Porenvolumen über 0,3 cm³/g hat.

7. Verfahren nach einem der Ansprüche 1 bis 6, bei dem der Katalysator in Gew.-% im Verhältnis zur Gesamtmasse des Katalysators einschließt:
- 1 bis 99,9% der Matrix, die in den Ansprüchen 1 bis 6 definiert ist,
- 0,1 bis 99% wenigstens eines Elements, das gewählt ist aus den Gruppen VIB und VIIII.

8. Verfahren nach einem der Ansprüche 1 bis 7, bei dem die Temperatur zwischen 250°C und 480°C liegt, der Druck über 1 MPa liegt, der Wasserstoffrezyklierungsgrad zwischen 50 und 5000 Liter Wasserstoff pro Liter Beschickung liegt und die stündliche Volumengeschwindigkeit zwischen 0,1 und 20 Beschickungsvolumen pro Katalysatorvolumen und pro Stunde liegt.

## Claims

1. Process for the hydrodesulfurization of hydrocarbons, using an amorphous or low crystallinity matrix, said matrix comprising titanium and at least one metal from group IVB (in the oxide form) selected from zirconium and hafnium, and said catalyst further comprising at least cobalt and molybdenum.

2. Process according to claim 1, wherein the group IVB metal is zirconium.

3. Process according to claim 1, wherein said catalyst further comprises at least one element selected from the group formed by yttrium, magnesium, calcium, aluminium and silicon.

4. Process according to claims 1 or 2 wherein said matrix comprises:
• 40% to 95% by weight of titanium oxide;
• 0.1 % to 0.6% by weight of said group IVB oxide.

5. Process according to claim 4 wherein said matrix further comprises 0 to 40% by weight of an oxide of at least one element selected from yttrium, magnesium, calcium, aluminium and silicon.

6. Process according to any one of claims 1 to 5 wherein said matrix, together with the other oxides it eventualy contains, has a specific surface area of more than 80 m²/g and a pore volume of more than 0.3 cm³/g.

7. Process according to any one of claims 1 to 6 wherein the catalyst comprises, by weight with respect to the total catalyst mass:
• 1 % to 99.9% of the matrix defined in claims 1 to 6,
• 0.1 % to 99% of at least one element selected from groups VIB and VIII.

8. Process according to any one of claims 1 to 7 wherein the temperature in the range 250°C to 480°C, the pressure is over 1 MPa, the hydrogen recycle ratio is in the range 50 to 5000 litres of hydrogen per litre of feed, and the hourly space velocity is in the range 0.1 to 20 volumes of feed per volume of catalyst per hour.
